# EUROPÄISCHE PATENTSCHRIFT

(11) **EP 2 219 897 B1**
(45) Veröffentlichungstag und Bekanntmachung des Hinweises auf die Patenterteilung: **18.01.2012**
(21) Anmeldenummer: 08857577.4
(22) Anmeldetag: 03.11.2008
(51) Int. Cl.: B60K 6/48, B60K 6/38, B60W 10/02, F16H 61/64, F16H 61/52

(54) **TRIEBSTRANGANORDNUNG EINES FAHRZEUGS UND VERFAHREN ZUM BETRIEB EINER TRIEBSTRANGANORDNUNG**
DRIVETRAIN ARRANGEMENT OF A VEHICLE, AND METHOD FOR OPERATING A DRIVETRAIN ARRANGEMENT
ARRANGEMENT DE CHAÎNE MOTRICE D'UN VÉHICULE ET PROCÉDÉ DE FONCTIONNEMENT D'UNE CHAÎNE MOTRICE

(30) Priorität: 05.12.2007 DE 102007058528
(43) Veröffentlichungstag der Anmeldung: 25.08.2010
(73) Patentinhaber: Robert Bosch GmbH, 70442 Stuttgart (DE)
(72) Erfinder: STEUERNAGEL, Frank, 70469 Stuttgart (DE)
(86) Internationale Anmeldenummer: PCT/EP2008/064851
(87) Internationale Veröffentlichungsnummer: WO 2009/071402

(56) Entgegenhaltungen:
- WO-A-03/093045
- DE-A1- 10 120 174
- DE-A1- 19 748 423

## Beschreibung

Die Erfindung betrifft eine Triebstranganordnung eines Fahrzeugs mit den im Oberbegriff des Anspruchs 1 genannten Merkmalen einerseits und ein zugehöriges Verfahren zum Betrieb einer Triebstranganordnung eines Fahrzeugs mit den im Oberbegriff des Anspruchs 13 genannten Merkmalen andererseits.

### Stand der Technik

Eine Triebstranganordnung eines Fahrzeugs und ein Verfahren zu deren Betrieb der eingangs genannten Art sind aus der Offenlegungsschrift DE 100 06 861 A1 bekannt. Die darin beschriebene Triebstranganordnung für ein Kraftfahrzeug umfasst aufeinander folgend eine Verbrennungskraftmaschine, eine Starterkupplung, eine elektrische Maschine, eine Fahrkupplung und ein automatisches Getriebe, vorzugsweise automatisiertes Schaltgetriebe. Dabei ist vorgesehen, dass der Starterkupplung und der Fahrkupplung ein gemeinsamer Doppelkupplungssteller zugeordnet ist, der eine wahlweise Einstellung des jeweiligen Status, nämlich geöffnet oder geschlossen, der Kupplungen durch Einnahme einer entsprechenden Schaltstellung ermöglicht.

Die elektrische Maschine ist prinzipbedingt in der Lage, bei niedrigen Drehzahlen ein hohes Anriebsmoment beziehungsweise eine vorzuhaltende Momentenreserve bereitzustellen. Allerdings liefert die elektrische Maschine bei hohen Drehzahlen prinzipbedingt lediglich ein geringes Antriebsmoment. Folglich muss bei einer Auslegung der elektrischen Maschine als Startergenerator und/oder als Antrieb einer Triebstranganordnung eines Fahrzeugs im Hinblick auf ihren Wirkungsgrad eine Entscheidung zu Gunsten des hohen Anriebsmoments oder zu Gunsten der hohen Drehzahlen getroffen werden. Bei der bekannten elektrischen Maschine liegt der Betriebsschwerpunkt auf deren Startvermögen, so dass ein hohes Antriebsmoment bei einem kleinen Drehzahlspektrum gegeben ist. Sofern die elektrische Maschine nach dem Starten der Verbrennungskraftmaschine für einen ausschließlich elektrischen Fahrbetrieb des Fahrzeugs eingesetzt werden soll, stellt deren Auslegung als momentenstarker Antrieb eine starke Einschränkung, insbesondere ein beschränktes Drehzahlvermögen, dar. Hohe Fahrzeuggeschwindigkeiten sind demzufolge mit einer derart ausgelegten Triebstranganordnung im Elektrobetrieb nicht erreichbar.

### Offenbarung der Erfindung

Die erfindungsgemäße Triebstranganordnung eines Fahrzeugs mit den im Anspruch 1 genannten Merkmalen bietet demgegenüber den Vorteil, dass ein ausgewogenes Verhältnis zwischen Antriebsstärke und Drehfreudigkeit gegeben ist. Dabei ist die Kraftübertragungseinheit mit einem eine Pumpe und eine Turbine umfassenden hydrodynamischen Drehmomentwandler versehen, der an einer Abtriebsseite eine Wirkverbindung mit der Verbrennungskraftmaschine aufweist. Dabei sorgt eine elektrische Maschine mit hohem Drehzahlvermögen und niedrigem Antriebsmoment in Verbindung mit der Kraftübertragungseinheit dafür, dass die Verbrennungskraftmaschine auf Grund momentenverstärkender Eigenschaften der Kraftübertragungseinheit dennoch mit einem hohen Antriebsmoment beim Starten versorgt wird. Darüber hinaus sind bei einem ausschließlich elektrischen Fahrbetrieb eines mit der Triebstranganordnung ausgestatteten Fahrzeugs hohe Drehzahlen und damit hohe Geschwindigkeiten erreichbar.

Obwohl die Abtriebsseite des hydrodynamischen Drehmomentwandlers in Wirkverbindung mit der Verbrennungskraftmaschine steht, also eine hinsichtlich konventioneller Triebstranganordnungen umgekehrte Wirkrichtung gegeben ist, können die gewünschten Anforderungen an einen leistungsstarken Antriebsstrang erfüllt werden. Ohnehin ist eine standardmäßig bislang zum Einsatz kommende Momentenerhöhung des hydrodynamischen Drehmomentwandlers in hybriden Antriebssträngen somit nicht mehr notwendig. Die veränderte Wirkrichtung des erfindungsgemäßen hydrodynamischen Drehmomentwandlers sorgt in Kombination mit einer leistungsstarken Elektromaschine für ein agiles Antriebsverhalten der Triebstranganordnung.

Eine hierbei auf die Verbrennungskraftmaschine wirkende Momentenerhöhung ist gewünscht und dient einem schnellen und erleichterten Starten der Verbrennungskraftmaschine. Außerdem ist ein auftretender Drehzahlschlupf und eine damit einhergehende dämpfende Wirkung des hydrodynamischen Wandlers beim Start der Verbrennungskraftmaschine gewünscht. Ferner kann die vorgehaltene Momentenreserve wirkungsvoll bei einer gleichzeitigen Verkleinerung hydrodynamischer Verluste während des elektrischen Fahrbetriebs minimiert werden, so dass dadurch eine Erhöhung der Leistungsfähigkeit der Triebstranganordnung als Teil eines hybriden Antriebsstrangs erzielbar ist. Auch eine direkte Anbindung der elektrischen Maschine an eine Abtriebseite des hybriden Antriebsstrangs ist somit ermöglicht. Letztlich kann auf eine eigenständige Trennkupplung inklusive Ansteuerung und Aktorik zwischen der Verbrennungskraftmaschine und der elektrischen Maschine zur Umsetzung des reinen elektrischen Fahrbetriebs verzichtet werden, da eine gleichwirkende Komponente als Teil der Kraftübertragungseinheit beziehungsweise des hydrodynamischen Wandlers vorgesehen ist. Dadurch können Bauteile eingespart und ein vorzusehendes Bauvolumen des hybriden Antriebsstrangs reduziert werden. Gleiches gilt in analoger Weise für das Verfahren zum Betrieb einer Triebstanganordnung eines Fahrzeugs mit den Merkmalen des Anspruchs 13.

Vorteilhafte Weiterbildungen ergeben sich durch die Merkmale der abhängigen Ansprüche.

In einer vorteilhaften Ausgestaltung der Erfindung ist es vorgesehen, dass die Kraftübertragungseinheit mit einer Wandlerüberbrückungskupplung versehen ist, mittels derer anhand einer Aktionsanforderung Komponenten eines Antriebsstrangs starr verbindbar sind. Mit einer situativ geschlossenen Wandlerüberbrückungskupplung kann eine Reduzierung des Kraftstoffverbrauchs der Verbrennungskraftmaschine und ein direktes Ansprechverhalten der Triebstranganordnung und damit des gesamten Antriebsstrangs erreicht werden, ohne auf vorteilhafte Eigenschaften des hydrodynamischen Drehmomentwandlers, wie beispielsweise eine Momentenerhöhung und eine dämpfende Wirkung, verzichten zu müssen. Die Momentenerhöhung unterstützt eine Beschleunigung des Fahrzeugs während eines Anfahrvorgangs und bringt die Drehzahl zum Beispiel eines Getriebeabtriebs auf eine gemeinsame Drehzahl mit der Verbrennungskraftmaschine.

Gemäß einer weiteren vorteilhaften Ausgestaltung der Erfindung ist es vorgesehen, dass die Kraftübertragungseinheit mit einer Zusatzkupplung, insbesondere weitere Wandlerüberbrückungskupplung, versehen ist. Die Zusatzkupplung dient insbesondere dazu, während eines ausschließlichen Elektrobetriebs eine über den hydrodynamischen Drehmomentwandler abgegebene, jedoch unerwünschte Momentenbeaufschlagung der Verbrennungskraftmaschine zu verhindern, da das über die elektrische Maschine erzeugte Drehmoment zum Antreiben der Verbrennungskraftmaschine mit Startfolge führen könnte. Diese Funktionsweise ist darin begründet, dass der hydrodynamische Drehmomentwandler bei einer Momentenrichtung von seiner Pumpe hin zu seiner Turbine als Kupplung mit einer Momentenerhöhung bei Drehzahlschlupf, insbesondere auf Grund einer Wirkverbindung zwischen einem Leitrad und einer Freilauffunktion, sowie bei Drehzahlgleichheit als ausschließliche Kupplung ohne Momentenerhöhung wirkt.

In einem bevorzugten Ausführungsbeispiel der Erfindung ist es vorgesehen, dass die Wandlerüberbrückungskupplung und die Zusatzkupplung als gemeinsame Doppelkupplung ausgeführt sind, um eine Bauteilreduzierung und eine kompakte Baueinheit zu erzielen. Unter einer Doppelkupplung wird eine lastschaltbare Kupplungseinheit verstanden, bei der die beiden Kupplungen meist konzentrisch zueinander angeordnet und unabhängig voneinander betätigbar sind.

Gemäß einer vorteilhaften Ausführungsvariante der Erfindung ist es vorgesehen, dass eine Wirkung der Pumpe auf die Turbine durch eine Reduzierung eines Fluidvolumens des hydrodynamischen Drehmomentwandlers unterbrechbar ist. Diese Funktionsweise kann an Stelle der Zusatzkupplung vorgesehen werden, so dass gleichermaßen während eines ausschließlichen Elektrobetriebs eine über den hydrodynamischen Drehmomentwandler abgegebene, jedoch unerwünschte Momentenbeaufschlagung der Verbrennungskraftmaschine verhindert werden kann.

In einer bevorzugten Weiterbildung der Erfindung ist es vorgesehen, dass die Wirkung der Pumpe auf die Turbine durch eine Veränderung einer Schaufelgeometrie der Turbine unterbrechbar ist. Auch hierbei kann ein unerwünschtes Anfahren der Verbrennungskraftmaschine während eines ausschließlichen Elektrobetriebs unterbunden werden, da der hydrodynamische Drehmomentwandler auf Grund der veränderten Schaufelgeometrie nicht mehr in der Lage ist, ein Drehmoment zu übertragen.

Gemäß einer vorteilhaften Ausführungsform der Erfindung ist es vorgesehen, dass die Verbrennungskraftmaschine, insbesondere bei einem Stop- oder Startvorgang derselben, mittels der Zusatzkupplung vollständig von dem Antriebsstrang abkoppelbar beziehungsweise vollständig an den Antriebsstrang ankoppelbar ist. Durch die vollständige Abkopplung kann eine Kriechfahrt des Fahrzeugs bei einem Haltevorgang vermieden werden. Dadurch reduziert sich der Kraftstoffverbrauch der Verbrennungskraftmaschine im Leerlaufbetrieb erheblich, da sowohl der hydrodynamische Drehmomentwandler als auch eine nachgeordnete Getriebeeinheit nicht mehr mitgeschleppt werden. Sobald ein Anfahrvorgang erfolgt, kann die Zusatzkupplung wieder zur Bereitstellung des vollen Drehmoments geschlossen werden. Ferner treten auf Grund der vollständigen Abkopplung geringere Schlupfleistungseinträge auf, so dass eine dementsprechende Reduzierung vorzusehender Kühlungseinrichtungen vorgenommen und dieser wiederum als Systemvorteil genutzt werden kann.

In einer bevorzugten Ausgestaltung der Erfindung ist es vorgesehen, dass die Wandlerüberbrückungskupplung aktiv öffenbar und passiv, insbesondere mittels Federkraft, schließbar ist. Die Wandlerüberbrückungskupplung wird somit in ihrer Ansteuerlogik umgekehrt, was in Verbindung mit der Zusatzkupplung als kraftschlüssige Verbindung zwischen der Verbrennungskraftmaschine und dem restlichen Triebstrang für einen optimalen Wirkungsgrad des Fahrzeugantriebs sorgt.

Gemäß einem vorteilhaften Ausführungsbeispiel der Erfindung ist es vorgesehen, dass die Wandlerüberbrückungskupplung mit einem Drehzahlregler der Verbrennungskraftmaschine in einer Wirkverbindung steht, mittels dem eine Abtriebsdrehzahl des hydrodynamischen Drehmomentwandlers erfassbar ist. Anhand des Drehzahlreglers kann somit eine Heranführung der Drehzahl der Verbrennungskraftmaschine an die Drehzahl des Abtriebs des hydrodynamischen Wandlers erfolgen. Befinden sich die beiden Drehzahlen auf dem gleichen Niveau, ist es möglich, die Wandlerüberbrückungskupplung zu schließen. Hierbei stellt die elektrische Maschine 12 beziehungsweise das Getriebe 14 beispielsweise mit seiner Getriebeeingangsdrehzahl eine Soll-Drehzahl zur Verfügung. Eine Ist-Drehzahl der Verbrennungskraftmaschine 11 kann allerdings durch einen Torsionsdämpfer des hydrodynamischen Drehmomentwandlers phasenweise verfälscht werden. Abhilfe kann über eine Korrekturfunktion, durch zusätzliche Drehzahlsensoren oder auch mittels einer schlupffähigen Wandlerüberbrückungskupplung mit Zusatzkupplung geschaffen werden.

In einer bevorzugten Ausgestaltung der Erfindung ist es vorgesehen, dass Anfahr- und/oder Lastwechselvorgänge insbesondere mittels der elektrischen Maschine erfolgen, wodurch ein dämpfendes Verhalten des Antriebsstrangs gewährleistet ist. Dabei besteht die Möglichkeit, die elektrische Maschine vorwiegend oder gänzlich einzusetzen.

Gemäß einer bevorzugten Ausgestaltung der Erfindung ist es vorgesehen, dass eine Betätigung zumindest einer der beiden Kupplungen, sprich der Wandlerüberbrückungskupplung und/oder der Zusatzkupplung, mittels Öldruck erfolgt, der insbesondere von dem Getriebe bereitgestellt wird. Bei einer von dem Getriebe beabstandet angeordneten Kraftübertragungseinheit können hierzu separate und mit Öldruck beaufschlagbare Zuleitungen und Ableitungen des Getriebes vorgesehen werden.

### Kurze Beschreibung der Zeichnungen

Die Erfindung sowie vorteilhafte Ausgestaltungen gemäß den Merkmalen der weiteren Ansprüche werden im Folgenden anhand der in den Zeichnungen dargestellten Ausführungsbeispiele näher erläutert, ohne dass insoweit eine Beschränkung der Erfindung erfolgt; diese umfasst vielmehr alle Abwandlungen, Änderungen und Äquivalente, die im Rahmen der Ansprüche möglich sind. Es zeigen:
- Figur 1: einen schematisch dargestellten hybriden Antriebsstrang, der nacheinander mit einer Verbrennungskraftmaschine, einer elektrischen Maschine, einer Kraftübertragungseinheit, einem Getriebe, einem Differentialgetriebe und mit einer Achse versehen ist;
- Figur 2: einen weiteren schematisch dargestellten hybriden Antriebsstrang mit einer Verbrennungskraftmaschine, einer Kraftübertragungseinheit, einer elektrischen Maschine, einem Getriebe, einem Differentialgetriebe und mit einer Achse; und
- Figur 3: einen dritten schematisch dargestellten hybriden Antriebsstrang mit einer Verbrennungskraftmaschine, einer modifizierten Kraftübertragungseinheit, einer elektrischen Maschine, einem Getriebe, einem Differentialgetriebe und mit einer Achse.

### Ausführungsform(en) der Erfindung

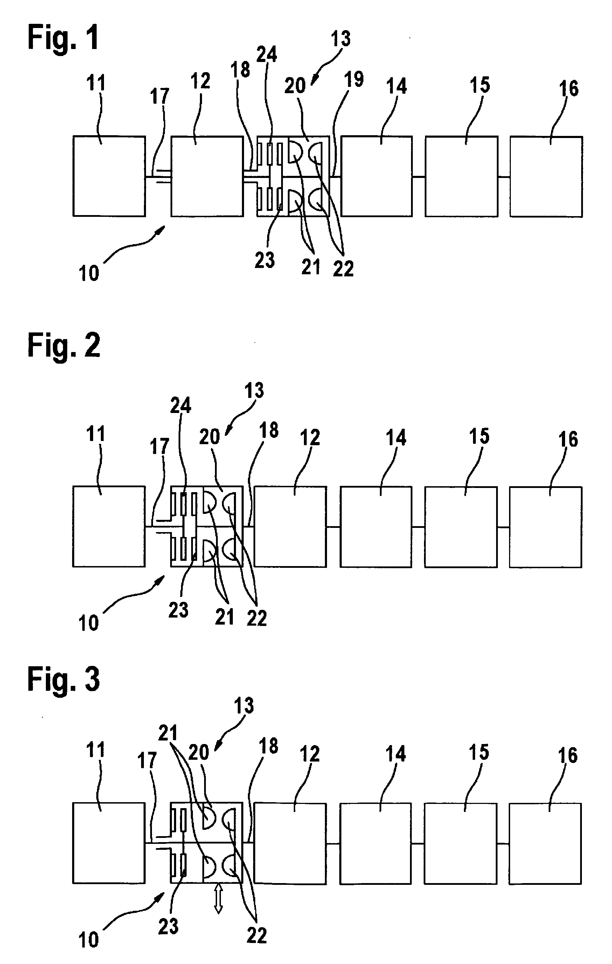

In Figur 1 ist eine Triebstranganordnung 10 eines Fahrzeugs, insbesondere Kraftfahrzeug, gezeigt, bei der aufeinander folgend eine Verbrennungskraftmaschine 11, eine elektrische Maschine 12, eine Kraftübertragungseinheit 13, ein Getriebe 14, ein Differentialgetriebe 15 und eine Achse 16 vorgesehen sind. Hierbei steht die Verbrennungskraftmaschine 11 mit der Kraftübertragungseinheit 13 in einer zu- und abschaltbaren Wirkverbindung 17. Je nach Betriebszustand der Kraftübertragungseinheit 13 kann mittels der Wirkverbindung 17 ein Drehmoment übertragen werden. Auch die elektrische Maschine 12 steht mit der Kraftübertragungseinheit 13 in einer wahlweise ein Drehmoment übertragenden Wirkverbindung 18, so dass zusammen mit der Verbrennungskraftmaschine 11 eine hybride Antriebseinheit, insbesondere ein parallelhybrider Antriebsstrang, gegeben ist. Die Kraftübertragungseinheit 13 steht ihrerseits mit dem Getriebe 14 in einer mechanischen Wirkverbindung 19. Das Getriebe 14 arbeitet mit dem Differentialgetriebe 15 und dieses mit der Achse 16 auf konventionelle Weise zusammen.

Die nach Figur 1 an dem Getriebe 14 montierte Kraftübertragungseinheit 13 weist neben einem hydrodynamischen Drehmomentwandler 20 mit einer Pumpe 21 und einer Turbine 22 auch eine Wandlerüberbrückungskupplung 23 und eine Zusatzkupplung 24 auf. Die Zusatzkupplung 24, insbesondere Zusatzreibkupplung, kann ebenfalls als Wandlerüberbrückungskupplung zum Einsatz kommen. Ferner können die Zusatzkupplung 24 und die Wandlerüberbrückungskupplung 23 als Doppelkupplung ausgeführt sein. Der hydrodynamische Drehmomentwandler 20 ist im Allgemeinen mit einem Leitrad und einer Freilauffunktion versehen und mit einem Torsionsdämpfer ausgestattet. Wesentlich ist hierbei, dass der hydrodynamische Drehmomentwandler 20 an seiner Abtriebsseite, das heißt turbinenseitig, die Wirkverbindung 17 mit der Verbrennungskraftmaschine 11 eingeht. Die Wirkverbindung 17 weist daher eine gegenüber konventionellen Antriebssträngen umgekehrte Wirkrichtung auf, bei der die Turbine 22 und nicht die Pumpe 21 mit der Verbrennungskraftmaschine 11 koppelbar ist.

Der hydrodynamische Drehmomentwandler 20 überträgt im Antriebsstrang Energie mittels eines in einem Gehäuse eingeschlossenen, strömenden Fluids, insbesondere Betriebsflüssigkeit. Der hydrodynamische Drehmomentwandler 20 ist dabei in der Lage, eine stufenlose Drehzahlanpassung und eine stufenlose Drehmomentwandlung zu erbringen. Der Wandler 20 kann in zwei Bereichen arbeiten. In einem ersten Arbeitsbereich als Drehmomentwandler mit einer Drehmomentsteigerung und ohne Drehmomentwandlung als hydrodynamische Kupplung im einem zweiten Arbeitsbereich. Die mit der elektrischen Maschine 12 verbundene Pumpe 21 erzeugt Strömungsenergie in der Betriebsflüssigkeit, und die mit der Verbrennungskraftmaschine 11 verbundene Turbine 22 wandelt die Strömungsenergie in mechanische Energie zurück. Das Leitrad zwischen der Turbine 22 und der Pumpe 21 lenkt dabei die strömende Flüssigkeit für einen Wiedereintritt in das so genannte Pumpenrad der Pumpe 21 um. Damit ist ein an die Verbrennungskraftmaschine 11 abgegebenes Drehmoment höher als ein von der elektrischen Maschine 12 aufgenommenes Pumpenmoment. Die Drehmomenterhöhung ist um so stärker, je größer die Drehzahldifferenz, das heißt der Schlupf, zwischen der Pumpe 21 und der Turbine 22 ist.

Gemäß Figur 2 ist eine weitere Triebstranganordnung 10 dargestellt, welche die gleichen Triebstrangkomponenten wie die Triebstranganordnung 10 nach Figur 1 aufweist. Allerdings ist die Kraftübertragungseinheit 13 zwischen der Verbrennungskraftmaschine 11 und der elektrischen Maschine 12 angeordnet. Bei den Ausführungen nach den Figuren 1 und 2 wirkt der hydrodynamische Drehmomentwandler 20 in der Momentenrichtung Pumpe-Turbine als Kupplung mit einer Momentenerhöhung bei Drehzahlschlupf auf Grund des Leitrads mit Freilauf und als reine Kupplung ohne Momentenerhöhung bei Drehzahlgleichheit. In der Wirkrichtung Turbine-Pumpe - bei Standard-Triebsträngen als "Schubbetrieb" bezeichnet - wirkt der hydrodynamische Drehmomentwandler 20 als Kupplung mit hohem Momentenverlust. Während eines reinen elektrischen Betriebs wirkt das übertragene Moment auf die Verbrennungskraftmaschine 11 und könnte zum Antreiben mit Startfolge derselben führen. Aus diesem Grund sind Maßnahmen zur Vermeidung einer ungewollten Momentenbeaufschlagung der Verbrennungskraftmaschine 11 vorzusehen. Beispielsweise kann dies über die Zusatzkupplung 24 erfolgen. Optional kann die Fluid-Füllstandsmenge im hydrodynamischen Drehmomentwandler 20 minimiert oder zum Beispiel die Schaufelgeometrie der Turbine 22 derart verändert werden, dass eine vollständige Abkopplung der Verbrennungskraftmaschine 11 erfolgt.

Ein hybridischer Fahrbetrieb mit angeschlossener Verbrennungskraftmaschine 11 stellt in einem hybriden Antriebsstrang den häufigsten Betriebsfall dar. Sofern die Verbrennungskraftmaschine 11 mit einem optimalen Wirkungsgrad zum Fahrzeugantrieb genutzt werden soll, ist eine Überbrückung des in der Wirkrichtung Turbine-Pumpe wenig effizienten hydrodynamischen Drehmomentwandlers 20 notwendig. Eine Verblockung des hydrodynamischen Wandlers 20 kann mit der Wandlerüberbrückungskupplung 23 erfolgen, die allerdings dazu aktiv mit einem Öldruck beaufschlagt werden muss. Anhand der kraftschlüssig wirkenden Zusatzkupplung 24 in Verbindung mit einer Umkehrung einer Ansteuerlogik, insbesondere im Sinne einer aktiven Öffnung und einer passiven Schließung durch Federkraft, kann ein Wirkungsgradnachteil während des hybridischen Fahrbetriebs kompensiert werden. Die Zusatzkupplung 24 wird dann bei Drehzahlgleichheit zwischen der Verbrennungskraftmaschine 11 und der elektrischen Maschine 12 geschlossen, um Stoß- oder Ruckeinwirkungen auf den Fahrzeugbetrieb beim Kuppeln zu vermeiden. Hierzu wird im Vorfeld die Drehzahl der Verbrennungskraftmaschine 11 an die Drehzahl der Elektromaschine 12 herangeführt.

In der Figur 3 ist eine andere Triebstranganordnung 10 gezeigt, die im Wesentlichen mit der Triebstranganordnung 10 gemäß Figur 2 übereinstimmt. Hierbei entfällt jedoch die Zusatzkupplung 24. Bei der Ausführungsform nach Figur 3 ist insbesondere eine Wirkung der Pumpe 21 auf die Turbine 22 durch eine Reduzierung des Fluidvolumens des hydrodynamischen Drehmomentwandlers 20 unterbrechbar. Weiterhin kann die Wirkung der Pumpe 21 auf die Turbine 22 durch eine Veränderung einer Schaufelgeometrie der Turbine 22 unterbrochen werden.

Bei den Ausführungen gemäß der Figuren 2 und 3 ist die elektrische Maschine 12 in der Lage, den hybriden Antriebsstrang nahezu schwingungsfrei anzutreiben. Durch Vermeidung der Anregung einer Resonanzfrequenz unterliegen konventionelle hybride Antriebsstränge im reinen elektrischen Fahrbetrieb geänderten Anforderungen. Beispielsweise kann auf schwingungsdämpfende Maßnahmen, die für einen reinen verbrennungsmotorischen Antrieb vorgesehen sind, im reinen elektrischen Fahrbetrieb nahezu verzichtet werden. Daraus ergibt sich zum Beispiel die Möglichkeit, die elektrische Maschine 12 direkt an den Abtrieb beziehungsweise an das Getriebe 14 zu montieren. Zu den daraus resultierenden konstruktiven Vorteilen zählt beispielsweise ein gemeinsamer Kühlkreislauf, bei dem in der Regel umlaufendes Getriebeöl genutzt werden kann. Auch bei einer Integration der Elektromaschine 12 in das Getriebe 14 können sich positive Effekte ergeben.

Sämtliche Funktionen des vorgenannten hydrodynamischen Drehmomentwandlers 20 nach den Figuren 1 bis 3 können über ein Steuergerät, insbesondere Getriebesteuergerät, gesteuert und überwacht werden.

Durch die konstruktiven Änderungen und Anordnungen des hydrodynamischen Wandlers 20 entfällt dessen dämpfendes Verhalten in so genannten Standardsituationen, in denen die Wandlerüberbrückungskupplung 23 nicht geschlossen wird. Hierzu zählen beispielsweise Anfahrvorgänge, niedrige Drehzahlen, generelle Lastwechsel und dergleichen. Das dämpfende Verhalten kann jedoch durch eine geeignete Betriebspunktwahl des Parallelhybriden erreicht werden, indem zum Beispiel Anfahrvorgänge vorwiegend elektrisch unterstützt werden. Des weiteren können kritische Betriebspunkte des hybriden Antriebsstrangs durch den standardmäßig integrierten Torsionsdämpfer eliminiert werden, welcher speziell Anregungen und Schwingungen der Verbrennungskraftmaschine 11 herausfiltert respektive dämpft.

Die Anordnung umfassend die Verbrennungskraftmaschine 11, den Torsionsdämpfer, den hydrodynamischen Drehmomentwandler 20 und die elektrische Maschine 12 bedingt einen den Torsionsdämpfer belastenden Start der Verbrennungskraftmaschine 11. Diese Anordnung ist jedoch einer Anordnung umfassend die Verbrennungskraftmaschine 11, die elektrische Maschine 12, den hydrodynamischen Wandler 20, den Torsionsdämpfer und das Getriebe 14 vorzuziehen, da dadurch zum einen eine direkte Dynamikreduzierung der agilen Elektromaschine 12 entstehen würde und zum anderen der Torsionsdämpfer zusätzliche Summen-Momente, insbesondere Summen-Wechselmomente, bewältigen müsste.

## Patentansprüche

1. Triebstranganordnung (10) eines Fahrzeugs mit einer Verbrennungskraftmaschine (11), einer elektrischen Maschine (12), einem Getriebe (14) und einer Kraftübertragungseinheit (13), **dadurch gekennzeichnet, dass** die Kraftübertragungseinheit (13) mit einem eine Pumpe (21) und eine Turbine (22) umfassenden hydrodynamischen Drehmomentwandler (20) versehen ist, der an einer Abtriebsseite eine Wirkverbindung mit der Verbrennungskraftmaschine (11) aufweist.

2. Triebstranganordnung (10) nach Anspruch 1, **dadurch gekennzeichnet, dass** die Kraftübertragungseinheit (13) mit einer Wandlerüberbrückungskupplung (23) versehen ist.

3. Triebstranganordnung (10) nach einem der vorhergehenden Ansprüche, **dadurch gekennzeichnet, dass** die Kraftübertragungseinheit (13) mit einer Zusatzkupplung (24), insbesondere weitere Wandlerüberbrückungskupplung, versehen ist.

4. Triebstranganordnung (10) nach einem der vorhergehenden Ansprüche, **dadurch gekennzeichnet, dass** die Wandlerüberbrückungskupplung (23) und die Zusatzkupplung (24) als gemeinsame Doppelkupplung ausgeführt sind.

5. Triebstranganordnung (10) nach einem der vorhergehenden Ansprüche, **dadurch gekennzeichnet, dass** eine Wirkung der Pumpe (21) auf die Turbine (22) durch eine Reduzierung eines Fluidvolumens des hydrodynamischen Drehmomentwandlers (20) unterbrechbar ist.

6. Triebstranganordnung (10) nach einem der vorhergehenden Ansprüche, **dadurch gekennzeichnet, dass** die Wirkung der Pumpe (21) auf die Turbine (22) durch eine Veränderung einer Schaufelgeometrie der Turbine (22) unterbrechbar ist.

7. Triebstranganordnung (10) nach einem der vorhergehenden Ansprüche, **dadurch gekennzeichnet, dass** die Verbrennungskraftmaschine (11), insbesondere bei einem Stop- oder Startvorgang, mittels der Zusatzkupplung (24) vollständig abkoppelbar beziehungsweise vollständig ankoppelbar ist.

8. Triebstranganordnung (10) nach einem der vorhergehenden Ansprüche, **dadurch gekennzeichnet, dass** die Wandlerüberbrückungskupplung (23) aktiv öffenbar und passiv schließbar ist.

9. Triebstranganordnung (10) nach einem der vorhergehenden Ansprüche, **dadurch gekennzeichnet, dass** die Wandlerüberbrückungskupplung (23) mit einem Drehzahlregler der Verbrennungskraftmaschine (11) in einer Wirkverbindung steht, mittels dem eine Abtriebsdrehzahl des hydrodynamischen Drehmomentwandlers (20) erfassbar ist.

10. Triebstranganordnung (10) nach einem der vorhergehenden Ansprüche, **dadurch gekennzeichnet, dass** Anfahr- und/oder Lastwechselvorgänge insbesondere mittels der elektrischen Maschine (12) erfolgen.

11. Triebstranganordnung (10) nach einem der vorhergehenden Ansprüche, **dadurch gekennzeichnet, dass** eine Betätigung zumindest einer der beiden Kupplungen (23;24) mittels, insbesondere von dem Getriebe (14) bereitgestelltem, Öldruck erfolgt.

12. Fahrzeug, insbesondere Kraftfahrzeug, **gekennzeichnet durch** eine Triebstranganordnung (10) nach einem der vorhergehenden Ansprüche.

13. Verfahren zum Betrieb einer Triebstanganordnung (10) eines Fahrzeugs, bei dem eine Verbrennungskraftmaschine (11), eine elektrische Maschine (12), ein Getriebe (14) und eine Kraftübertragungseinheit (13) eingesetzt werden, **dadurch gekennzeichnet, dass** die Kraftübertragungseinheit (13) mit einem eine Pumpe (21) und eine Turbine (22) umfassenden hydrodynamischen Drehmomentwandler (20) betrieben wird, welcher an einer Abtriebsseite auf die Verbrennungskraftmaschine (11) einwirkt.

## Claims

1. Drive train arrangement (10) of a vehicle having an internal combustion engine (11), an electrical machine (12), a gear mechanism (14) and a force-transmission unit (13), **characterized in that** the force-transmission unit (13) is provided with a hydrodynamic torque converter (20) which comprises a pump (21) and a turbine (22) and, at an output side, is operatively connected to the internal combustion engine (11).

2. Drive train arrangement (10) according to Claim 1, **characterized in that** the force-transmission unit (13) is provided with a torque converter lock-up clutch (23).

3. Drive train arrangement (10) according to either of the preceding claims, **characterized in that** the force-transmission unit (13) is provided with an additional clutch (24), in particular a further torque converter lock-up clutch.

4. Drive train arrangement (10) according to one of the preceding claims, **characterized in that** the torque converter lock-up clutch (23) and the additional clutch (24) are configured as a common dual clutch.

5. Drive train arrangement (10) according to one of the preceding claims, **characterized in that** an action of the pump (21) on the turbine (22) can be interrupted by a reduction in a fluid volume of the hydrodynamic torque converter (20).

6. Drive train arrangement (10) according to one of the preceding claims, **characterized in that** the action of the pump (21) on the turbine (22) can be interrupted by changing a blade geometry of the turbine (22).

7. Drive train arrangement (10) according to one of the preceding claims, **characterized in that** the internal combustion engine (11), in particular during a stopping or starting operation, can be completely decoupled or completely coupled by means of the additional clutch (24).

8. Drive train arrangement (10) according to one of the preceding claims, **characterized in that** the torque converter lock-up clutch (23) can be opened actively and closed passively.

9. Drive train arrangement (10) according to one of the preceding claims, **characterized in that** the torque converter lock-up clutch (23) is operatively connected to a speed regulator of the internal combustion engine (11), it being possible to detect an output speed of the hydrodynamic torque converter (20) by means of said speed regulator.

10. Drive train arrangement (10) according to one of the preceding claims, **characterized in that** starting operations and/or load-changing operations are carried out in particular by means of the electrical machine (12).

11. Drive train arrangement (10) according to one of the preceding claims, **characterized in that** at least one of the two clutches (23; 24) is actuated by means of oil pressure, which is provided in particular by the gear mechanism (14).

12. Vehicle, in particular motor vehicle, **characterized by** a drive train arrangement (10) according to one of the preceding claims.

13. Method for operating a drive train arrangement (10) of a vehicle, in which an internal combustion engine (11), an electrical machine (12), a gear mechanism (14) and a force-transmission unit (13) are used, **characterized in that** the force-transmission unit (13) is operated with a hydrodynamic torque converter (20) which comprises a pump (21) and a turbine (22) and acts at an output side on the internal combustion engine (11).

## Revendications

1. Agencement de chaîne motrice (10) d'un véhicule comprenant un moteur à combustion interne (11), une machine électrique (12), une transmission (14) et une unité de transfert de force (13), **caractérisé en ce que** l'unité de transfert de force (13) est pourvue d'un convertisseur de couple hydrodynamique (20) comprenant une pompe (21) et une turbine (22), qui présente, sur un côté de sortie, une liaison fonctionnelle avec le moteur à combustion interne (11).

2. Agencement de chaîne motrice (10) selon la revendication 1, **caractérisé en ce que** l'unité de transfert de force (13) est pourvue d'un embrayage de court-circuitage de convertisseur (23).

3. Agencement de chaîne motrice (10) selon l'une quelconque des revendications précédentes, **caractérisé en ce que** l'unité de transfert de force (13) est pourvue d'un embrayage supplémentaire (24), notamment d'un embrayage de court-circuitage de convertisseur supplémentaire.

4. Agencement de chaîne motrice (10) selon l'une quelconque des revendications précédentes, **caractérisé en ce que** l'embrayage de court-circuitage de convertisseur (23) et l'embrayage supplémentaire (24) sont réalisés sous forme de double embrayage commun.

5. Agencement de chaîne motrice (10) selon l'une quelconque des revendications précédentes, **caractérisé en ce qu'**un effet de la pompe (21) sur la turbine (22) peut être interrompu par une réduction d'un volume de fluide du convertisseur de couple hydrodynamique (20).

6. Agencement de chaîne motrice (10) selon l'une quelconque des revendications précédentes, **caractérisé en ce que** l'effet de la pompe (21) sur la turbine (22) peut être interrompu par une variation d'une géométrie des aubes de la turbine (22).

7. Agencement de chaîne motrice (10) selon l'une quelconque des revendications précédentes, **caractérisé en ce que** le moteur à combustion interne (11), en particulier lors d'une opération d'arrêt ou de démarrage, peut être complètement désaccouplé ou accouplé au moyen de l'embrayage supplémentaire (24).

8. Agencement de chaîne motrice (10) selon l'une quelconque des revendications précédentes, **caractérisé en ce que** l'embrayage de court-circuitage de convertisseur (23) peut être ouvert activement et fermé passivement.

9. Agencement de chaîne motrice (10) selon l'une quelconque des revendications précédentes, **caractérisé en ce que** l'embrayage de court-circuitage de convertisseur (23) est en liaison fonctionnelle avec un régulateur de régime du moteur à combustion interne (11), au moyen duquel un régime de sortie du convertisseur de couple hydrodynamique (20) peut être détecté.

10. Agencement de chaîne motrice (10) selon l'une quelconque des revendications précédentes, **caractérisé en ce que** des opérations de démarrage et/ou de changement de charge ont lieu notamment au moyen de la machine électrique (12).

11. Agencement de chaîne motrice (10) selon l'une quelconque des revendications précédentes, **caractérisé en ce qu'**un actionnement d'au moins l'un des deux embrayages (23 ; 24) a lieu au moyen d'une pression d'huile, notamment fournie par la transmission (14).

12. Véhicule, en particulier véhicule automobile, **caractérisé par** un agencement de chaîne motrice (10) selon l'une quelconque des revendications précédentes.

13. Procédé pour faire fonctionner un agencement de chaîne motrice (10) d'un véhicule, dans lequel un moteur à combustion interne (11), une machine électronique (12), une transmission (14) et une unité de transfert de force (13) sont utilisés, **caractérisé en ce que** l'unité de transfert de force (13) est activée avec un convertisseur de couple hydrodynamique (20) comprenant une pompe (21) et une turbine (22), lequel convertisseur de couple agit au niveau d'un côté de sortie sur le moteur à combustion interne (11).
